# EUROPEAN PATENT APPLICATION

(11) **EP 3 179 360 A1**
(43) Date of publication of application: **14.06.2017**
(21) Application number: 16201285.0
(22) Date of filing: 29.11.2016
(51) Int. Cl.: G06F 3/12

(54) **DIRECT CHARACTER RECOGNITION FROM PAGE DESCRIPTION LANGUAGE DOCUMENT**

(30) Priority: 07.12.2015 US 201514960986
(71) Applicant: Xerox Corporation, Rochester, NY 14644 (US)
(72) Inventor: POUYADOU, Jérome, 38000 Grenoble (FR); HOPPENOT, Yves, 38220 Notre-Dame-de-Mésage (FR)
(74) Representative: Gill Jennings & Every LLP

(57) **Abstract**

A method for extracting text from a page description language ("PDL") document includes capturing a PDL file generated by a print driver for a printed document. The PDL file contains a set of drawing instructions for drawing a run of text formed from a series of glyphs. The PDL file is parsed to extract the drawing instructions of each glyph. The glyph drawing instructions are compared with a database of glyph characteristics. When a match is found between the drawing instructions and the database of glyph characteristics a corresponding text character associated with that set of characteristics is extracted. Where no match is found, the drawing instructions may be rendered as a bitmap and features extracted from the bitmap are compared with stored features to identify a glyph with similar features, or if there is none, an error may be recorded. A text summary may be generated.

## Description

### BACKGROUND

The exemplary embodiment relates to the field of text extraction and finds particular application in connection with extraction of text from documents without the need for optical character recognition.

A page description language (PDL) describes documents that are to be printed in a printer-independent format. A printer to which an electronic PDL document is sent renders the document on paper or other print medium. There are several instances where it would be desirable to capture the textual content of a document in PDL format. These include performing security checks to detect confidential information on documents which should not be printed; detecting the customer for which a document is being printed in order to charge the printing costs; usage control to differentiate personal print jobs from professional ones or check that color printers are used for appropriate documents; auditing to detect what users are printing and for which reasons; and indexation in situations where all printed documents are archived and indexed to speed up later retrieval.

However existing methods for character recognition, such as Optical Character Recognition (OCR), are not amenable to processing documents in PDL format. One reason is that in the case of documents to be printed, there is no need for the print rendering engine, or Raster Image Processor (RIP), to know which characters are being printed. The RIP only needs to know where to place ink dots on the printed page so that the overall combined result appears as meaningful text to a human reader. Notations and APIs used to render text may exist for most PDLs and for most documents. However the actual 'value' of the characters being displayed is irrelevant to rendering. Thus, this information is not included in the data that reaches the printer.

Existing PDL-to-text tools extract text from PDL documents by assuming that there exists a form of mapping between well-known identifiers (usually strings) and the glyph they represent. While this is often true, it is not always the case and many documents avoid this type of mapping in order to extend the set of characters being represented. In these cases, the text extraction produces erroneous results. In other cases where this type of mapping is not used, text extraction is generally considered to be impossible. Additionally, the available tools tend to work only on the PostScript computer language, which is only one of the many available PDL currently in use.

Another approach for text extraction entails converting the PDL documents to images at the time they reach the printer or within the printer itself and applying OCR techniques to reconstruct the text. However, rendering and OCR approaches can be time consuming, especially when the document contains many pages because every page is rendered before OCR is run on the entire document. This processing time can be particularly problematic in the context of security detection, where a rule-based engine is looking for a specific word in a document but must wait for rendering of the entire document and OCR before the word can be detected, even if it appears in the first page.

There is therefore a need for a system and method that can recognize characters directly from text-based PDL documents at the time they are printed.

### BRIEF DESCRIPTION

In accordance with one aspect of the exemplary embodiment, a method of extracting text from a page description language (PDL) document is provided. The method includes capturing a PDL file generated by a print driver for a document to be printed. The PDL file includes a PDL document including a set of drawing instructions for a run of text formed from a series of glyphs in the document to be printed. The PDL document is parsed to extract drawing instructions for each of a set of glyphs. For each glyph in the set of glyphs, the drawing instructions of the glyph are compared with a database of glyph characteristics to determine whether there is a matching glyph in the database. If a match is found between the drawing instructions and the database of glyph characteristics, a text character associated with the matching database glyph is extracted. A summary of the extracted text characters associated with the matching glyphs is generated.

One or more of the steps of the method may be implemented by a processor.

In accordance with another aspect of the exemplary embodiment, a system for extracting text from a page description language (PDL) of a document includes a capture component that captures a PDL file generated by a print driver for a printed document. The PDL file contains a set of drawing instructions for drawing a run of text formed from a series of glyphs in the printed document. A parser parses the PDL file to intercept the drawing instructions of each glyph. A comparison component compares the drawing instructions of each glyph with a database of glyph characteristics. An extraction component extracts a text character associated with each glyph when a match is found between the drawing instructions and the database of glyph characteristics based on the comparison of the drawing instructions with the database of glyph characteristics. A summary component generates a text summary of the extracted text characters associated with each glyph. A processor implements the capture component, parser, comparison component, extraction component, and summary component.

In accordance with another aspect of the exemplary embodiment, a method of extracting text from a page description language (PDL) of a document, includes providing a reference database of text characters defined by a set of glyph characteristics associated with each of the text characters and receiving a PDL document generated by a print driver. With a processor, the PDL document is parsed to identify a text-drawing primitive in the PDL document. The method further includes identifying a text character represented by the text-drawing primitive in the reference database based on a comparison of the text-drawing primitive with the set of glyph characteristics, extracting the text character represented by the text-drawing primitive, and outputting information based on the extracted text characters.

One or more of the steps of the method may be implemented by a processor.

### BRIEF DESCRIPTION OF THE DRAWINGS

FIGURE 1 is an overview of a system and method for direct character recognition from a page description language (PDL) document;
FIGURE 2 is a functional block diagram of a system for direct character recognition from a page description language (PDL) document in accordance with one aspect of the exemplary embodiment;
FIGURE 3 is a block diagram illustrating additional aspects of the system of FIGURE 2;
FIGURE 4 is a symbolic representation of a reference database of text characters defined by glyph characteristics; and
FIGURE 5 is a flowchart, illustrating an exemplary method for direct character recognition from a PDL document in accordance with another aspect of the exemplary embodiment.

### DETAILED DESCRIPTION

Aspects of the exemplary embodiment relate to a method, apparatus and computer-readable medium for applying local character recognition to typical office documents at or about the time they are printed. The method is general enough to be usable in other contexts where similar font technologies are used and when glyph-to-character information is lost.

The exemplary method provides for direct character recognition from page description language (PDL) documents. The method may include parsing a PDL file which is created when a user initiates a print job, for example by clicking "print" from an application. The PDL document to be parsed may be composed of drawing instructions. For each visual representation of a symbol (glyph) that is processed, the character it represents is found by matching the glyph characteristics with a reference database. The reference database can be based on glyph lookup in a database of fonts. The font can use the TrueType/OpenType technology in which case the recognition is made directly by the quadratic splines control points of the glyph. In other cases, recognition is made by a semi-exact visual similarity.

In one embodiment, the method may include intercepting a set of text-related operators from a PDL file.

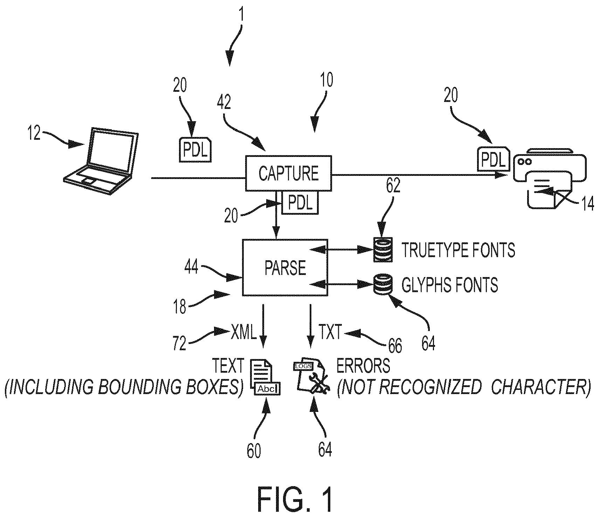

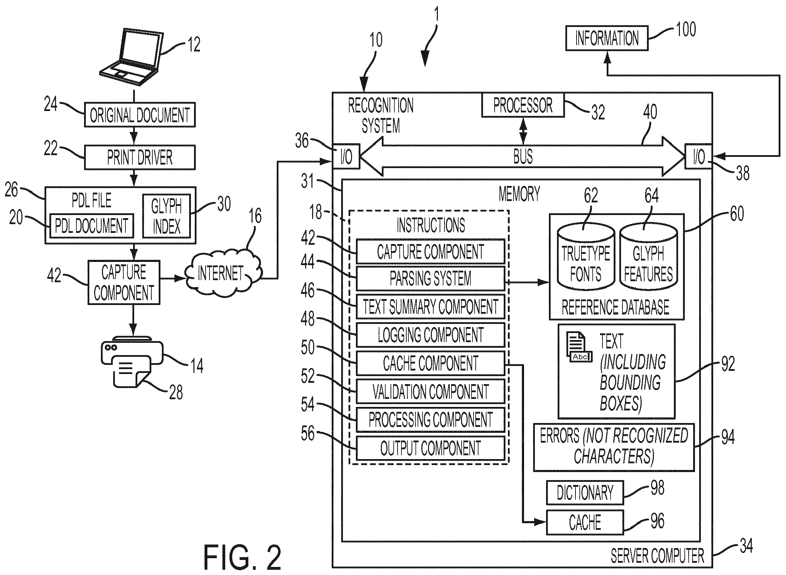

FIGURE 1 is an overview of document processing in a printing network 1 in which a system 10 for direct character recognition from a page description language (PDL) document operates. In general, computer software consistent with disclosed embodiments may be deployed on system 10. The network may include one or more networked PDL generation devices, such as computers 12, and one or more printers 14 that are connected through communication links 16 (FIG. 2) that allow information to be exchanged using conventional communication protocols and/or data port interfaces.

Each computing device **12** in the network **1** may be a computer workstation or desktop computer, laptop or portable computer, handheld device, or any other computing device capable of being used in a networked environment.

As illustrated in FIGURE 2, a PDL document **20** is created by a print driver **22** when a user requests a print job at computing device **12**. To print an original document **24**, a user of the computing device **12** employs a specific application command, usually in the form of a 'print dialog' where the user can, for example, select a destination printer, such as printer **14**, and several finishing options (e.g., duplex mode, stapling, color or monochrome, and selection of pages) for printing the original document. When the print option selections have been made (e.g., when the user clicks a "print" selector, such as an icon or keyboard key), the application renders each page of the document in digital form using a form of virtual display provided by the print driver **22**. In particular, the print driver **22** converts drawing instructions provided by the application to printer-specific drawing instructions. These printer-specific drawing instructions have their own syntax, which is different from the source application drawing syntax. A set of such printer-specific drawing instructions constitutes the PDL document **20**, which may be sent to the printer in a PDL file **26**.

The print driver **22** may be a part of the computer **12** or located on a separate computing device intermediate the computing device **12** and the printer **14**.

As in conventional network printing systems, the PDL file **26** is created by the print driver in a specified PDL format, such as PS or PCL6, from an original document **24**, which is in a native format that is open in a specific application. For example, an office document could be opened by a word processor, a spreadsheet handler or a slide presentation application, depending on its type. The format of this source document **24** may be publicly known or not, but it is nevertheless specific to the application in which it is created, modified, and/or viewed. Most printers cannot understand such native formats directly.

The PDL data **20** is transferred to the selected printer **14**, after the conversion of the source document into the PDL language and may include an image representation of each page, although this is not necessarily the case. Although PDL formats differ in their syntax and representation, all PDL formats are based on computer graphics primitives. These primitives are program instructions whose ultimate goal is to draw graphical elements on a 'display surface,' in this case a sheet of paper. Such primitives include image drawing primitives which take as input image bitmaps of various formats and cause them to be rendered on paper. Other primitives include graphics primitives used to represent geometric shapes, such as line segments, circles, rectangles, and Bézier curves, for example. Depending on the level of sophistication of the PDL, these instructions can also include some form of texture representation (i.e., patterns used to fill graphical shapes) as well as various line attributes (color, width, and dashes, for example). Also included are text-drawing primitives that are used to draw the glyphs of text strings (also referred to as 'runs'). Some languages may include non-drawing primitives used to modify the behavior of drawing primitives. Typically, non-drawing primitives are used to modify a coordinate system, such as matrix operations or page rotation operators which are used for switching from portrait to landscape printing. Non-drawing primitives can also modify various device control operators, for example, output tray selection or finishing options.

While text-drawing operations exist in most PDL formats, this does not mean that all text on a given sheet of printed material is drawn with text instructions, as further described below. However, wherever text instructions are used, the rendering device **14** is generally aware that it is printing text and not any other kind of graphics.

In many cases, text operators work by taking as argument the sequentially allocated identifiers of the glyphs to be rendered on physical media **28**, such as paper, instead of the actual characters that make up a run of text (i.e., a sequence of characters that may or may not fall on word boundaries). For example, rather than receiving instructions similar to the following pseudo code: *operatorDrawText("hello"),* the printer **14** may receive instructions identifying the glyph codes of the letters, such as: *operatorDrawText(12,1,15,15,21)*. In this example, *12* is the index of the glyph that represents the character 'h' in the current font, *1* is the index of 'e', *15* the index of 'I' and *21* the index of 'o'.

A glyph index **30**, which stores the indices and instructions for rendering the corresponding characters, may be sent to the printer, e.g., in the PDL file **26**. This index is often not specific to the font; therefore it is not possible to use a simple index-to-glyph mapping table. Most print drivers construct the glyph index **30** incrementally as they produce the PDL document **20**. The indices are typically allocated whenever a character has to be drawn for the first time for a given font during the job. For example, in the above example, 'e' happens to be the first character to be displayed for the selected font during the job, therefore acquires the index *1*, h is the 12th and acquires the index *12*, and so on. From this, it should be clear that even if the hooking of text operators is possible, there is no practical way to go back to the character to be drawn from the glyph indices only.

It should be noted that, even if processed by single text drawing operators, glyphs can be stored in many formats. Typical formats include pure bitmaps, TrueType contours (which are basically a set of Bézier points used to draw the glyph curves), and/or PostScript instructions used in the PostScript PDL and its variations, such as PDF. In this case, the glyph curves are drawn using a subset of PostScript instructions embedded in the glyph description. Other variations include, for example, Adobe Type 2, CFF, and Chameleon fonts, whose formats may or may not be proprietary.

The illustrated direct character recognition system **10** includes memory **31** which stores instructions **18** for performing the exemplary method and a processor **32** (or processors) in communication with the memory for executing the instructions. The system may be distributed over one or more computing devices, such as a server computer **34**. In other embodiments, the system **10** may be hosted on computing device **12**, printer **14**, or distributed over the network **1**. One or more input-output ("I/O") devices **36**, **38** allow the system to communicate with external devices, such as computer **12** and/or printer **14**. Hardware components **31**, **32** of the system are communicatively connected by a data/control bus **40**. Information sent/received from computer **12**, printer **14,** and/or server computer **34** can include data, commands, information pertaining to the location and formatting of language data files, capability requests, status requests, responses, and/or acknowledgements according to the protocol being used.

The exemplary instructions **18** include a capture component **42**, a parsing system **44**, a text summary component **46**, a logging component **48**, a cache component **50**, a validation component **52**, a text processing component **54**, and an output component **56**, although fewer, more, or different components may be provided.

The capture component **42** is located on the network **1**, intermediate the print driver **22** and the printer **14**, e.g., on the server computer **34**, or a separate computing device communicatively connected with the server computer. The capture component intercepts the PDL file **26** on its way to the printer and forwards a copy of the PDL document and the glyph index to the parsing system. The parsing system **44** parses the captured PDL document **20** according to the PDL format.

The parsing system **44** intercepts every text-related operator of each glyph of the PDL document **20** according the PDL format and performs direct character recognition. The illustrated parsing system has access to a reference database **60** which includes at least one of a TrueType font database **62** and a glyph features database **64**.

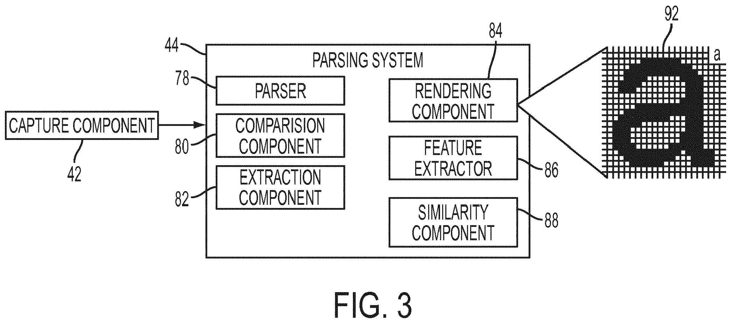

In some embodiments, the parsing system **44** may be configured as illustrated in FIGURE 3. In this embodiment, the parsing system includes a parser **78**, a comparison component **80**, an extraction component **82**, a rendering component **84**, a feature extractor **86**, and a similarity component **88**. However, fewer, more or different components may be included.

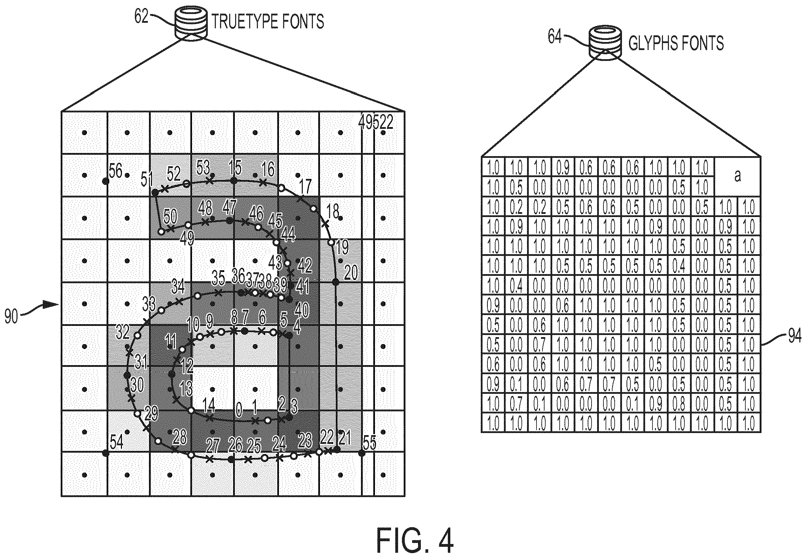

The TrueType font database **62** may include a list of TrueType contours for each of a predefined set of characters. For example, the TrueType database **62** may be a collection of glyph point coordinates that have be generated from a large number, e.g., at least ten, or at least a hundred, or at least a thousand of the available TrueType fonts. TrueType fonts stored in the TrueType database **62** are those commonly utilized in typical office documents, representing the bulk of fonts used many business environments. The outlines of the glyphs **90** in TrueType fonts are made of straight line segments and quadratic Bézier curve points, as illustrated in FIGURE 4.

The glyph features database **64** may include a set of glyph features generated from stock fonts for each of a set of predefined characters. The glyph features database **64** may thus include a collection of pre-computed vectors. The pre-computed features can be generated from standard stock fonts or can be generated for customer-specific fonts. To create the glyph features database **64**, the input glyphs are each rendered as a bitmap **92** that exactly surrounds the most external contours of each input glyph, as illustrated in FIG. 3. The bitmap may have binary values or may have non-binary values. A bitmap **92** of the letter "a" is imaged in FIG. 4 and takes the form of an array. The value of each element corresponds to the color of that portion of the image. The letter "a" may be represented in a 12x14 matrix where the values in the matrix depict the brightness of the pixels (picture elements). Larger values correspond to brighter areas whilst lower values are darker. A count of the number of consecutive pixels of the same color, or run-length features, can be extracted from the bitmap for each glyph and stored in the glyph features database **64** as feature vectors.

In some embodiments, the parser **78** may identify individual objects such as glyphs representing individual text characters. The glyphs and associated text characters are generally coded in text-drawing primitives within the PDL document **20**. The text-drawing primitives are a set of drawing instructions used to draw the glyphs in a run of text. The parser **78** can parse the PDL file **20** according to the PDL format used, such as PostScript ("PS") or Printer Command Language ("PCL6"), for example, and intercept every text-related operator or glyph drawing instruction. Other PDL formats include but are not limited to PCL5, BBJL, Portable Document Format ("PDF"), and XML Paper Specification ("XPS").

In one embodiment for direct character recognition, for each glyph in the text operator string argument, the parser obtains the glyph shape based on the glyph index **30**. Because many documents make use of TrueType fonts, the glyph index **30** may use TrueType fonts. In this embodiment, the glyph identifier **78** identifies each drawing instruction for a TrueType glyph in the PDL document **20**. If the glyph shape obtained from the captured PDL document **20** is a TrueType contour list, the comparison component **80** compares the drawing instruction with the TrueType database of glyph characteristics **68** to determine whether there is a matching list in the TrueType font database **62**. In particular, the comparison component **80** compares the straight line segments and quadratic Bézier curve points of the input glyph in the drawing instructions of the PDL document **20** with the straight line segments and quadratic Bézier curve points of each character **90** stored in the TrueType database **62**. If a match is found between the lists of points, the text character has been found and can be extracted by the extraction component **82**.

In another embodiment, for direct character recognition, e.g., if the glyph shape obtained is not a TrueType font (e.g., the parser **78** identifies a drawing instruction for a glyph shape that is not a TrueType contour in the TrueType database **68**) or if a match is not found, the glyph features database **64** can be accessed. In this embodiment, the rendering component **84** renders the glyph as a bitmap **94** (FIG. 3) exactly surrounding its contours, as for the stock fonts. For example, each pixel in the bitmap has a binary value of 'on' or 'off,' 'on' being for pixels that fall substantially within the contours of the glyph and 'off' for background pixels. The feature extractor **86** receives the bitmap generated by the rendering component and extracts a set of features from the generated bitmap **94**, e.g., in the form of one or more feature vectors, in the same manner as for the stock fonts in the database **64**. The features vector may be a count of the number of consecutive pixels of the same color, or run-length features, collected from the bitmap as a vector. The features vector can be stored as an array, similar to the array depicted in FIG. 4. The similarity component **88** computes a similarity between the extracted features vector and the features vectors in the glyph features database **64** for each of a set of characters in the glyph features database **64**. The similarity computation can be a distance calculation between the extracted features vector and the collection of precomputed vectors stored in the glyph features database **64**. The Euclidean distance or Bhattacharyya distance can be calculated, for example. However, other standard feature extraction or distance methods could alternatively be used.

If at least one feature set is found in the database **64** that is above a threshold similarity with the set of glyph features extracted from the bitmap, the character with the most similar feature set to the glyph feature set is identified. The character has thus been found and can be extracted. Accordingly, if a match is found between glyph features coded in the drawing instructions of the PDL document **20** and the database of glyph characteristics, based on the distance calculation computed by the similarity component, the extraction component **82** extracts the text character associated with the most similar glyph. This mapping between the initially unknown input glyph shape and the glyph features database **64** can be stored in a cache **96** by the cache component **50**. The next time parser **44** identifies the same drawing instructions in the PDL document **20** for the same input glyph shape, system **10** can determine a direct match in the glyph features database **64** using the cache, without resorting to feature extraction and distance comparison.

For each identified character, as the character is identified or once the parser system **44** finishes parsing PDL document **20** and all text characters have been extracted, the summary component **46** generates a text summary **92** of the extracted text characters associated with each glyph. For each match identified by the parser for a given text-related operator, the text summary component **46** adds the extracted character to the text summary and its location in the document page. The text summary **92** can be in a format which permits it to be read by a computing device, such as computing device **12**, and/or a user operating the device **12**. The text summary **92** may be stored as an Extensible Markup Language ("XML") file.

If no match is found, the fact that a candidate character at the given location was not able to be identified can be noted by the parser system. In particular, if no text-character is recognized, the logging component **48** keeps track of the missed text-character. The logging component can store the missed text characters in an error log **94**. Error log **94** can be stored in memory **31** as a text ("TXT") file, for example.

The validation component **52** identifies candidate words in the sequence of identified characters and accesses a dictionary **98** to determine if the candidate word is present. If so, the candidate word is validated and a sequence of validated words may be output.

The processing component **54** may process at least a portion of the sequence of validated words and render a decision based thereon. For example, the processing component may search for one or more keywords and make a decision, such as whether or not the document is permitted to be printed, and/or the client to be billed for the printing, or the like.

The output component **56** outputs information from the system **10**, such as the validated sequence of words, and/or any errors/non validated words, and/or a decision output by the processing component **54**. If the decision is that the document should/should not be printed, the information may be sent to the printer to permit/prevent printing. If the decision is a client to be billed, the information may be sent to a billing system (not shown). In other embodiments, the information may be the sequence of identified words which may be sent to another computer device for processing.

The network links **16** may include subnets, Local Area Networks (LANs), and/or the internet.

The input/output components **36**, **38** may each include a modulator/demodulator (MODEM), a router, a cable, Ethernet port, and/or other communication devices (not shown) that permit peripherals that are coupled to network 1 to communicate with other devices over wired or wireless connections in accordance with the policies set, for example, by a network administrator. It may be noted that that the computing devices **12** may include a plurality of devices, such as PCs or workstations, coupled via one or more network linking systems **16**.

The printer or printers **14** may be laser printers, ink jet printers, LED printers, plotters, and/or any other device capable of rendering an image on physical media, such as paper using a rendering medium, such as ink or toner. The printers **14** may take the form of computer printers, facsimile machines, digital copiers, multi-function devices, and/or other devices that are capable of printing documents.

Connection **16** couples computing device **12** and printer **14** to network **1**. Connection **16** may be implemented as a wired or wireless connection using appropriate conventional communication protocols and/or data port interfaces. In general, connection **16** can be any communication channel that allows transmission of data between the devices. In one embodiment, for example, devices may be provided with data ports **36**, such as USBTM, SCSI, FIREWIRETM, and/or BNC ports for transmission of data through the appropriate connection **16**. The communication links may be wireless links or wired links or any combination that allows communication between the computing device **12** and the printer **14**.

Printer **14** may be controlled by hardware, firmware, or software, or some combination thereof. The system **10** for direct character recognition from PDL documents may be deployed on one or more of exemplary computer **12** and/or printer **14**, or on a separate device, as shown in FIG. 2. For example, printer **14** may execute software or firmware that permits printer **14** to optimize the processing of direct character recognition in a manner consistent with disclosed embodiments. In another embodiment, the system **10** may be resident on computer **12** and operate on PDL data intended for printer **14**. In general, the system components may execute in whole or in part on one or more computer **12**, **34** and/or printers **14** in the system.

The digital processor **32** may be a general-purpose processor, a special purpose processor, or an embedded processor. Processor **32** can exchange data including control information and instructions with memory **31**. Memory **31** may be any type of Dynamic Random Access Memory ("DRAM") and/ or read only memory (ROM), such as SDRAM, or RDRAM. Instructions **18** may hold instructions including but not limited to a boot-up sequence, one or more pre-defined routines including routines to: process documents described using PDLs, such as parsing the PDL, compilers for programming languages, automatic code generation routines, optimization routines for the processing of function based object operations in interpreted page description languages; process incoming requests and messages; compose outgoing responses and messages; as well as routines for configuration management, routines for document processing, and other code. In some embodiments, code in instructions **18** may be copied to memory **31** prior to being acted upon by processor **32**. Instructions **18**, including any PDL processing and optimization routines, may be upgradeable using one or more of computer **12** and network links **16**.

In some embodiments, computing device **12** may send printable data in a document **20** specified using a PDL to printer **14** via print driver **22**. Printer **14** may invoke routines to parse the PDL document **20** with the parser **44**. A capture component **24** intercepts the PDL document after it is generated by the print driver **20**, but before the document is sent to the printer **14** for printing. The parser **44** may identify various objects, operators, and structures in the PDL data **20** and perform operations or initiate actions associated with the recognized objects, operators, and/or structures.

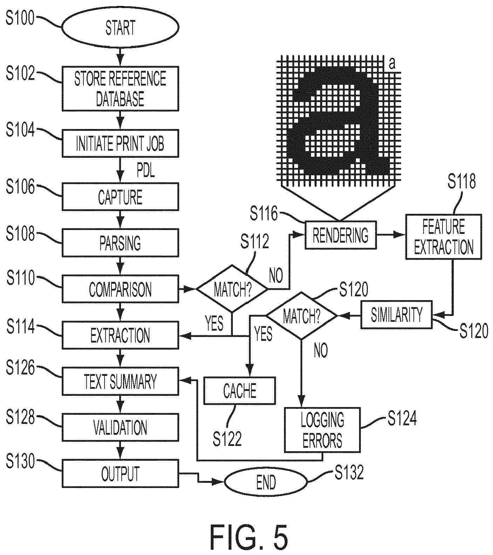

FIG. 5 illustrates an exemplary method for direct character recognition from PDL documents which may be performed in the computer network of FIGURE 2. The method begins at S100. At S102, access is provided to a reference database **60** of text characters defined by a set of glyph characteristics associated with each of the text characters. The reference database may be stored in memory. The reference database of text characters can include a TrueType font database and/or a glyph features database as described above.

At S104, a print job is initiated for a document specified in a PDL format by the print driver.

At S106, the PDL document **20** is received or captured by the system 10 illustrated in FIG. 1 and FIG. 2. The PDL document may include a set of drawing instructions for drawing a run of text formed from a series of glyphs in the printed document.

At S108, the PDL document is parsed to intercept or identify any drawing instructions for a text comprised of a plurality of glyphs. The drawing instructions can be in the form of a text-drawing primitive used to draw the glyphs of texts strings, which are also known as "runs." The PDL parsing can be performed anywhere on the pipeline between the output of the print driver and the printing of the document at the printer. PDL parsing can be performed after the PDL document is generated by the print driver, e.g., at the last stage of the print driver conversion, but before the document is printed, such as at the port monitor of the computer or print server. If desired, the PDL document can be captured directly from the network via switch or router, for example. This is possible when the network is not encrypted or where the encryption system is known.

At S110, the drawing instructions identified at S108 are compared with the database of glyph characteristics to find a text character represented by the drawing instructions. If the parsing step identifies a drawing instruction for a TrueType glyph, the drawing instruction is compared with a TrueType database of glyph characteristics. As discussed above, the TrueType database is simply a collection of glyph point coordinates that can easily be generated from the thousands of available TrueType fonts. The input glyph points are compared with the reference database records until a match is found. Advantageously, many businesses use TrueType fonts for typical office documents. If desired, the TrueType database can be supplemented or replaced with customer-specific fonts in order to further speed up the glyph retrieval.

If at S112, a match is found between the drawing instructions and a text character in the database of glyph characteristics, then at S114, a text character is extracted. Otherwise, the method may proceed to S116.

When techniques other than TrueType glyphs are used, or if the glyph technique is TrueType but there are no matching TrueType points for a given document glyph in the database, the glyph shape is rendered (S116) as a bitmap for further processing.

At S118, a features vector is extracted, based on the bitmap. For example, the number of consecutive pixels of the same color is counted from the bitmap and stored as a run-length features vector.

At S120, the similarity is computed between the extracted features vector and the glyph features database. The glyph features database, as described above, is collection of pre-computed vectors which can be easily generated from standard stock fonts, or can be generated for customer-specific needs if required. The similarity computation of S120 can be a simple image similarity estimation that uses classical feature distance computations such as those used in automated image classification software. For example, the similarity computation can be a distance calculation, such as Euclidean or Bhattacharyya distance, between the extracted features vector and the collection of precomputed vectors stored in the glyph features database. Other standard feature extraction or distance methods can be used, however, for the simple monochrome shapes of text characters, run-length vectors and Euclidean or Bhattacharyya distances prove sufficient to give very good results.

If at S120, at least one feature set is found that is similar enough to the input glyph shape based on the computed distance calculation, the method proceeds to S114 to extract the text character associated with the input glyph shape based on the similarity. Optionally, at S122 this mapping between the initially unknown input glyph shape and the glyph features database can be stored in the cache. The next time the parsing in S108 identifies the same drawing instructions in the PDL document for the same input glyph shape, system **10** can determine a direct match in the glyph features database without resorting to the feature extraction of S118 and the similarity computation in S120.

If at S120, no matching text character is found, the method proceeds to S124, where an error is logged. Missed text characters can be logged and stored in memory as a TXT file, for example.

The method advances from S114 to S126, where a text summary is generated based on the text characters extracted in S114 and errors logged at S124. The generated text summary may be readable by both machine and users operating the system **10** and can be stored in XML format.

Optionally, at S128 the text summary generated in S126, comprising the extracted text characters, can be cross-checked with a dictionary to validate a word formed from the extracted text characters. For example, a PDL document may include a drawing instruction for a lower-case "L," which is the same drawing instruction for an upper-case "i." This is the case for font types where both text characters are drawn as a straight vertical line "I." In this situation, the cross-checking with the dictionary can reduce ambiguity by limiting invalid character recognition and ensuring the correct text character is represented in the text summary generated at S126. If desired, the cross-checking can be performed with a generic dictionary or a specific dictionary to recognize specific words formed from the extracted text characters. The specific dictionary can be provided by a customer requiring recognition of specific text characters and words. Errors logged at S124 can be considered as "any character" when comparing a candidate word with the dictionary.

At S130, information is output, such as the optionally validated text summary.

The method ends at S132.

The method can be implemented in software for performing the functions described. Exemplary pseudocode is shown in Algorithm 1 below:

| Algorithm 1 |
|---|
| For each glyph in the text operator 'string' argument |
| {Obtain the glyph shape based on the glyph index given as argument |
| If(the glyph shape is a TrueType contour list) |
| {look for a match in the TrueType database |
| If(a match is found) |
| {we have found the character}} |
| If(the glyph shape is NOT a TrueType contour list or if we did not find a match) |
| {Render the glyph as a bitmap exactly surrounding its contours. Extract the features of the given bitmap Compute the similarity of these features with the reference features database |
| If(at least one feature set was found close enough to the candidate) |
| {We have found the character; this is the one closest to any reference feature}} |
| If(no match was found) |
| {Keep trace of the fact that we missed a character at the given location}} |

The method illustrated in FIGURE 5 may be implemented in a computer program product that may be executed on a computer. The computer program product may comprise a non-transitory computer-readable recording medium on which a control program is recorded (stored), such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other tangible medium from which a computer can read and use.

Alternatively, the method may be implemented in transitory media, such as a transmittable carrier wave in which the control program is embodied as a data signal using transmission media, such as acoustic or light waves, such as those generated during radio wave and infrared data communications and the like.

The exemplary method may be implemented on one or more general purpose computers, special purpose computer(s), a programmed microprocessor or microcontroller and peripheral integrate circuit elements, an ASIC or other integrated circuit, a digital signal processor, a hardwired electronic or logic circuit such as a discrete element circuit, a programmable logic device such as PLD, PLA, FPGA, Graphical card CPU (GPU), or PAL, or the like. In general, any device, capable of implementing the flowchart shown in FIGURE 5, can be used to implement the method.

It will be appreciated that variants of the above-disclosed and other features and functions, or alternatives thereof, may be combined into many other different systems or applications. Various presently unforeseen or unanticipated alternatives, modifications, variations or improvements therein may be subsequently made by those skilled in the art which are also intended to be encompassed by the following claims.

## Claims

1. A method of extracting text from a page description language (PDL) document, comprising:
capturing a PDL file generated by a print driver for a document to be printed, wherein the PDL file comprising a PDL document comprising a set of drawing instructions for a run of text formed from a series of glyphs in the document to be printed;
parsing the PDL document to extract drawing instructions for each of a set of glyphs;
for each glyph in the set of glyphs, comparing the drawing instructions of the glyph with a database of glyph characteristics to determine whether there is a matching glyph;
when a match is found between the drawing instructions and the database of glyph characteristics, extracting a text character associated with the glyph; and
generating a summary of the extracted text characters associated with the matching glyphs.

2. The method of claim 1, wherein at least one of the capturing, parsing, comparing, extracting and generating is performed with a processor.

3. The method of claim 1, further comprising logging a missed text character when a match is not found between the drawing instructions and the database of glyph characteristics.

4. The method of claim 1, wherein the set of glyph characteristics comprises a run-length feature vector for each of a set of glyphs.

5. A computer program product comprising a non-transitory recording medium storing instructions, which when executed by a computer, perform the method of claim 1.

6. A system for extracting text from a page description language (PDL) of a document, comprising memory which sores instructions for performing the method of claim 1 and a processor in communication with the memory for executing the instructions.

7. A system for extracting text from a page description language (PDL) of a document, comprising:
a capture component that captures a PDL file generated by a print driver for a printed document, wherein the PDL file contains a set of drawing instructions for drawing a run of text formed from a series of glyphs in the printed document;
a parser that parses the PDL file to intercept the drawing instructions of each glyph;
a comparison component that compares the drawing instructions of each glyph with a database of glyph characteristics;
an extraction component that extracts a text character associated with each glyph when a match is found between the drawing instructions and the database of glyph characteristics based on the comparison of the drawing instructions with the database of glyph characteristics;
a summary component that generates a text summary of the extracted text characters associated with each glyph; and
a processor which implements the capture component, parser, comparison component, extraction component, and summary component.

8. The system of claim 7, further comprising a logging component that generates an error log for a missed text character when a match is not found between the drawing instructions and the database of glyph characteristics based on the comparison of the drawing instructions with the database of glyph characteristics.

9. The system of claim 7, further comprising a rendering component that renders each glyph as a bitmap, a feature extractor that extracts a features vector based on the bitmap of each glyph, a similarity component that computes the similarity between the extracted features vector and the database of glyph characteristics, wherein the extraction component extracts a text character associated with each glyph based on the similarity between the extracted features vector and the database of glyph characteristics

10. A method of extracting text from a page description language (PDL) of a document, comprising:
providing a reference database of text characters defined by a set of glyph characteristics associated with each of the text characters;
receiving a PDL document generated by a print driver;
with a processor, parsing the PDL document to identify a text-drawing primitive in the PDL document;
identifying a text character represented by the text-drawing primitive in the reference database based on a comparison of the text-drawing primitive with the set of glyph characteristics;
extracting the text character represented by the text-drawing primitive; and
outputting information based on the extracted text characters.
